# EUROPÄISCHE PATENTSCHRIFT

(11) **EP 0 704 748 B1**
(45) Veröffentlichungstag und Bekanntmachung des Hinweises auf die Patenterteilung: **31.10.2001**
(21) Anmeldenummer: 95113031.9
(22) Anmeldetag: 18.08.1995
(51) Int. Cl.: G03B 27/58

(54) **Aufwickelvorrichtung für Rollenmaterial**
Winding device for rolled web
Dispositif d'enroulement de matériaux enroulés

(30) Priorität: 19.09.1994 IT BZ940057
(43) Veröffentlichungstag der Anmeldung: 03.04.1996
(73) Patentinhaber: DURST PHOTOTECHNIK A.G., 39042 Brixen (IT)
(72) Erfinder: Obertegger, Franz, I-39042 Brixen (IT); Gandini, Mario, I-39042 Brixen (IT)
(74) Vertreter: Füchsle, Klaus, Dipl.-Ing.

(56) Entgegenhaltungen:
- EP-A- 0 476 418
- WO-A-90/05690
- DE-A- 2 445 259
- DE-A- 3 116 041
- FR-A- 707 730
- US-A- 3 547 369
- US-A- 5 117 241
- US-A- 5 176 334

## Beschreibung

Die vorliegende Erfindung betrifft eine Aufwickelvorrichtung für Rollenmaterial, insbesondere für ein Bildbelichtungsgerät mit einer angetriebenen Wickeltrommel, gemäß dem Oberbegriff des Anspruchs 1.

Eine derartige Vorrichtung ist aus der US 5117241 bekannt und weist eine angetriebene Wickeltrommel auf, zu der das Rollenmaterial in weitgehend horizontaler Richtung geführt wird. Es ist ein Sensor vorgesehen, um eine Ausbauchung des Rollenmaterials vor der Wickeltrommel zu erfassen. Ein automatisches Aufwickeln eines Rollenmaterials von Beginn des Aufwickelns an ist hierdurch nicht möglich.

Ferner ist aus der US 3,547,369 eine Aufwickelvorrichtung mit einem beweglichen Arm bekannt, der eine Rolle aufweist. Diese Rolle wirkt jedoch als Rollengrössen-Erfassungseinrichtung und kann nicht für ein automatisches Aufwickeln des Beginns der Papierbahn sorgen.

Schliesslich ist aus der EP 0 643 997 eine Aufwickelvorrichtung bekannt, bei der zwei schwenkbare Leitorgane vorgesehen sind, die das Rollenmaterial bzw. Bandmaterial um eine hohlzylindrische Führungshülse führen, die auf einen drehbar gelagerten, antreibbaren Wickelkern aufschiebbar ist. Hierbei ist die Führungshülse in ihrer Betriebsstellung einrastbar.

Grundsätzlich besteht bei Aufwickelvorrichtungen für Rollenmaterial das Problem, das Material möglichst gleichmäßig aufzuwickeln, ohne das Material zu beschädigen und ohne daß Knicke, Faltungen oder ähnliches entstehen. Insbesondere bei Verarbeitung von breitem Rollenmaterial, beispielsweise in der Größenordnung von 1300 mm, ergeben sich beim Aufwickeln jedoch leicht Unregelmäßigkeiten.

Es ist deshalb die der vorliegenden Erfindung zugrundeliegende Aufgabe, eine Aufwickelvorrichtung für Rollenmaterial mit einer angetriebenen Wickeltrommel derart weiterzubilden, daß das Rollenmaterial vollkommen gleichmäßig auf die Wickeltrommel aufgewickelt wird, insbesondere wenn dies eine größere Breite von beispielsweise 1300 mm aufweist und mittels derer ein automatischer Beginn des Aufwickelvorgangs realisiert werden kann

Die Lösung dieser Aufgabe erfolgt durch die Merkmale des Patentanspruchs 1.

Insbesondere ist ein Sensor vorgesehen, der den Antrieb der Wickeltrommel steuert und der die Position des Rollenmaterials vor der Wickeltrommel detektiert.

Durch die erfindungsgemäße Lösung läßt sich die Wickeltrommel derart steuern, daß das Rollenmaterial vor der Wickeltrommel stets eine bestimmte Position einnimmt, was durch Beschleunigen oder Abbremsen des Antriebs der Wickeltrommel erfolgen kann. Hierdurch ist gewährleistet, daß das Rollenmaterial zwischen der Position des Sensors und dem Wickelkern eine gleichbleibende geringe Spannung aufweist, wodurch Ungleichmäßigkeiten beim Aufwickeln vermieden sind.

Durch den Sensor ist ein Ausbauchen des Rollenmaterials detektierbar. Überraschenderweise hat sich nämlich herausgestellt, daß das Rollenmaterial besonders gleichmäßig aufgewickelt werden kann, wenn dieses vor der Wickeltrommel einen "Bauch" bildet. Hierbei kann die Bildung des Bauches durch den Sensor detektiert werden, der wiederum den Antrieb der Wickeltrommel entsprechend steuert, so daß stets ein solcher Bauch gebildet wird.

Das Rollenmaterial wird in im wesentlichen vertikaler Richtung zu der Wickeltrommel geführt. Auch hier hat sich herausgestellt, daß diese Maßnahme das gleichmäßige Aufwickeln auf den Wickelkern der Wickeltrommel verbessert. Hierbei kann das Rollenmaterial je nach Durchmesser des Wickels unter einem Winkel von 80°-100° zur Horizontalen geführt werden. Zu Beginn des Aufwickelvorgangs wird hierbei ein Winkel von ca. 100° mit der Horizontalen gebildet, der mit zunehmendem Wickeldurchmesser abnimmt, so daßbei vollständig aufgewickeltem Wickel ein Winkel von ca. 80° zur Horizontalen erreicht ist.

Der Sensor der Aufwickelvorrichtung kann nach einer bevorzugten Ausbildung der Erfindung einen Kipphebel aufweisen, der mit einer Feder versehen sein kann. Ein solcher Kipphebel kann an seinem einen Ende den zu bildenden Bauch des Rollenmaterials abtasten, wobei das andere Ende mit dem Sensor zusammenwirken kann. Durch eine Feder mit entsprechend geringer Federkraft läßt sich hierbei das Rollenmaterial ohne Beeinflussung abtasten.

Nach einer weiteren Ausführungsform kann der Sensor, der beispielsweise eine Gabellichtschranke aufweisen kann, ein analoges Ausgangssignal abgeben. Hierdurch wird der besondere Vorteil erzielt, daß das Ausgangssignal des Sensors eine Information über die Größe des Abstands des Rollenmaterials von dem Sensor enthält. Hierdurch läßt sich der Antrieb der Wickeltrommel besonders feinfühlig regeln.

Oberhalb der Wickeltrommel kann nach einer weiteren Ausbildung eine Umlenkeinrichtung, beispielsweise in Form einer Freilaufwalze, für das Rollenmaterial angeordnet sein. Durch diese Maßnahme wird erreicht, daß sich der Bauch zwischen einer definierten Strecke ausbilden kann, nämlich zwischen der Umlenkrichtung und dem Wickelkern. Dies trägt ebenfalls zu einem gleichmäßigen Aufwickeln bei.

Nach einer weiteren Ausführungsform der Erfindung kann der Sensor an einem beweglichen Führungselement für das Rollenmaterial angeordnet sein. Ein solches bewegliches Führungselement entfernt sich mit zunehmendem Wickeldurchmesser von der Wickelachse der Wickeltrommel.

Sofern der Sensor an diesem Führungselement angeordnet ist, ergibt sich der große Vorteil, daß ein zunehmender Wickeldurchmesser die Bildung des Bauches des Rollenmaterials nicht beeinflußt, da der Sensor aufgrund seiner Anordnung einen gleichbleibenden Abstand zum Außenumfang des Wickels besitzt.

Nach einer weiteren vorteilhaften Ausführungsform der Erfindung kann das Rollenmaterial vor dem Aufwickeln durch eine Bremseinrichtung geführt werden. Hierdurch wird die Gleichmäßigkeit der Transportgeschwindigkeit und des Aufwickelvorganges noch verbessert, da das Rollenmaterial kontrolliert zugeführt werden kann. Sofern die Bremseinrichtung eine Wirbelstrombremse aufweist, ergibt sich der ganz bedeutende Vorteil einer vollkommen gleichmäßigen und ruckfreien Bewegung des Rollenmaterials, da durch die Verwendung der Wirbelstrombremse keinerlei Unstetigkeiten oder Unregelmäßigkeiten in das System eingehen, da die Wirbelstrombremse, im Gegensatz zu beispielsweise einem Gleichstrommotor oder ähnlichem, ein konstantes Bremsmoment erzeugt.

Eine vorteilhafte Steuerung der erfindungsgemäßen Vorrichtung kann dadurch erreicht werden, daß der Antrieb der Wickeltrommel derart gesteuert wird, daß das Rollenmaterial eine Ausbauchung mit im wesentlichen gleichbleibender Krümmung bildet.

Die vorliegende Erfindung wird anhand einer beispielhaften Ausführungsform unter Bezugnahme auf die beigefügten Zeichnungen beschrieben. Es zeigen:
Fig. 1 eine Seitenansicht eines Bildbelichtungsgerätes mit einer erfindungsgemäßen Aufwickelvorrichtung;
Fig. 2 eine schematische Darstellung des Sensors, der die Position des Rollenmaterials detektiert; und
Fig. 3 ein Diagramm, das die Abhängigkeit des Ausgangssignals des Sensors von dem Abstand des Rollenmaterials darstellt.

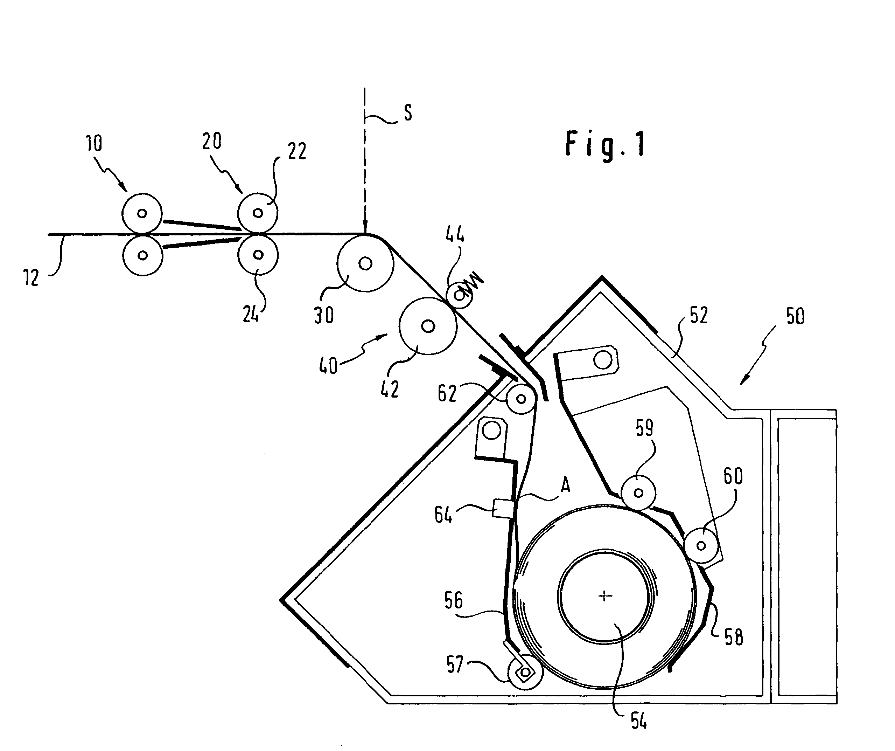

Das in Fig. 1 dargestellte Bildbelichtungsgerät besteht grundsätzlich aus einer schematisch angedeuteten Zuführeinrichtung 10, einer Bremseinrichtung 20, einer Belichtungs- und Umlenkwalze 30, einem Antrieb 40 sowie der Aufwickeleinheit 50. Zwischen der Bremseinrichtung 20 und der Walze 30 ist eine nicht dargestellte Schneideinrichtung vorgesehen.

Die schematisch dargestellte Zuführeinrichtung 10 umfaßt ein Walzenpaar sowie verschiedene Führungs- und Leitbleche, die ein kontrolliertes Zuführen des Rollenmaterials, beispielsweise einer Papierbahn aus Fotopapier ermöglicht.

Die Bremseinrichtung 20 weist eine Bremswalze 22 und eine Gegendruckwalze 24 auf, zwischen denen die Papierbahn 12 geführt wird. Hierbei ist die Bremswalze 22 über ein Riemengetriebe mit einer nicht dargestellten Wirbelstrombremse verbunden. Hierbei kann die Bremskraft über die Stärke des Wirbelstromes gesteuert werden.

Die Belichtungs- und Umlenkwalze 30 dient einerseits dazu, eine gleichmäßige Auflage für die Papierbahn zu schaffen, damit ein eintreffender Belichtungsstrahl S die Papierbahn belichten kann, ohne daß es zu Ungleichmäßigkeiten kommt. Andererseits wird durch die Walze 30 die Papierbahn aus der Horizontalen in einem Winkel von ca. 40° nach unten abgelenkt.

Die Papierbahn wird anschließend durch die Antriebseinrichtung 40 geführt, die eine angetriebene Walze 42 und eine Gegendruckeinrichtung 44 aufweist. Die Gegendruckeinrichtung 44 besteht dabei aus mehreren einzeln gefederten Walzen, wodurch ein verzerrungs- und versetzungsfreier Antrieb der Papierbahn erreicht wird.

Nach dem Durchlaufen der Antriebseinrichtung 40 gelangt die Papierbahn 12 in die Aufwickelvorrichtung 50, die in einem Gehäuse 52 angeordnet ist.

Die Aufwickelvorrichtung 50 weist eine angetriebene Wickeltrommel 54 auf, wobei der Antrieb der Wickeltrommel nicht dargestellt ist. Ferner sind in dem Gehäuse 52 zwei gelenkig gelagerte Leitbleche 56 und 58 angeordnet, die für ein gleichmäßiges Aufwickeln sorgen. Hierbei weist das Leitblech 56 an seinem vorderen Ende eine Rolle 57 auf, die auf dem sich bildenden Wickel abrollt. In ähnlicher Weise ist das Leitblech 58 mit zwei Rollen 59 und 60 versehen, die für ein automatisches Aufwickeln auf die Wickeltrommel 54 sorgen.

Im Bereich der Einführöffnung weist die Aufwickelvorrichtung 50 eine Umlenkrolle 62 auf, welche die Papierbahn 12 in eine im wesentlichen vertikale Richtung umlenkt.

In etwa in der Mitte zwischen der Umlenkrolle 62 und dem Außenumfang der Wickeltrommel 54 ist an dem Leitblech 56 ein Sensor 64 angebracht.

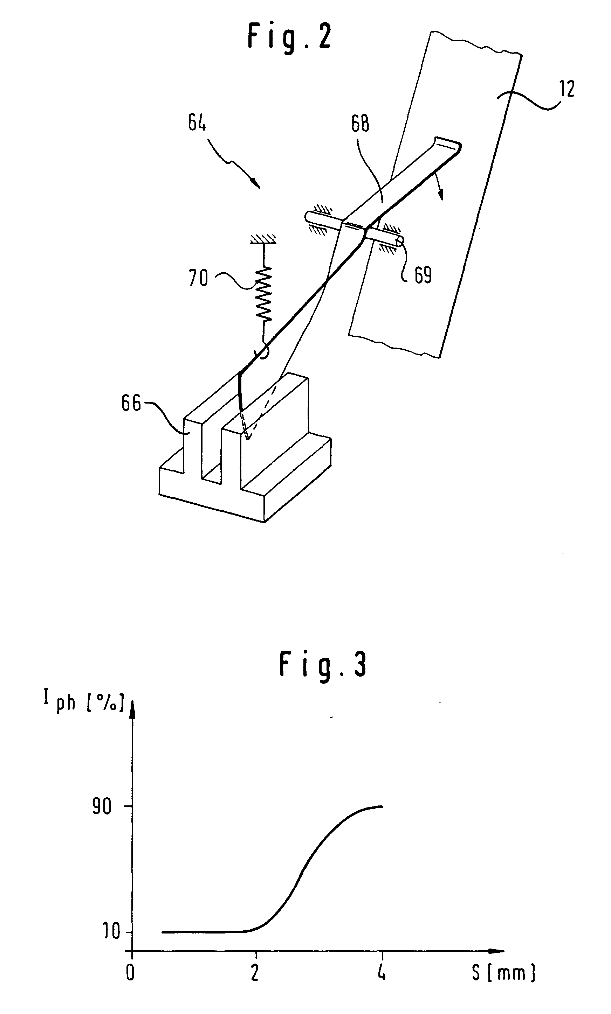

Fig. 2 zeigt schematisch die Ausbildung des Sensors 64, der eine Gabellichtschranke 66 sowie einen Kipphebel 68 aufweist. Der Kipphebel 68 ist an einem Gelenk 69 gelagert und mit einer Feder 70 gefedert. Hierbei tastet das in Fig. 2 rechte Ende des Kipphebels 68 die Position der Papierbahn 12 ab, wobei das in Fig. 2 linke Ende des Kipphebels 68 mit der Gabellichtschranke 66 zusammenwirkt.

Die Kennlinie des Sensors 64 von Fig. 2 ist in Fig. 3 dargestellt. Wie zu erkennen ist, enthält der Fotostrom der Gabellichtschranke 66 eine Information über die Größe des Abstands der Papierbahn 12 von dem Sensor 64. Hierdurch läßt sich durch die Größe des erzeugten Fotostroms der Abstand der Papierbahn 12 in einem Bereich von ca. 2 mm problemlos feststellen. Da der Kipphebel 68 gewinkelt ausgebildet ist, kann durch die Wahl des Hebelverhältnisses die Wegauflösung eingestellt werden.

Nachfolgend wird die Funktionsweise des oben beschriebenen Bildbelichtungsgerätes und der erfindungsgemäßen Aufwickelvorrichtung beschrieben.

Zu Beginn des Belichtungsvorgangs wird die Papierbahn 12 von der Zuführeinrichtung 10 zugeführt und gelangt in die Bremseinrichtung 20. Anschließend wird die Papierbahn 12 über die Belichtungswalze 30 und die Antriebseinrichtung 40 in die Aufwickelvorrichtung 50 geführt. Durch die dort vorgesehenen Leitbleche 56 und 58 sowie die damit verbundenen Rollen 57, 59 und 60 wird der Beginn der Papierbahn von selbst auf die Wickeltrommel aufgewickelt, wenn die Antriebseinrichtung 40 sowie der Antrieb der Wickeltrommel 54 betätigt werden.

Bei dem nachfolgenden Belichtungsvorgang wird die Antriebseinrichtung 40 in Betrieb gesetzt und zieht die Papierbahn 12 über die Belichtungswalze 30, wobei die Bremseinrichtung 20 in Verbindung mit der vorgesehenen Wirbelstrombremse für ein absolut ruckfreies und gleichmäßiges Abrollen der Papierbahn sorgt. Während des Papiertransports wird der Belichtungsstrahl S auf die Papierbahn 12 gerichtet und dabei senkrecht zur Papierbahn abgelenkt. Hierbei ist der Antrieb des Ablenkspiegels für den Belichtungsstrahl S mit dem Schrittmotor der Antriebseinrichtung 40 verbunden, um eine Synchronisation zwischen der Längsbewegung der Papierbahn und der Querbewegung des Belichtungsstrahles S zu erzielen. Hierdurch werden Toleranzen des Antriebs des Ablenkspiegels kompensiert und eventuell auftretende Bildverzeichnungen werden verhindert.

Während des Aufwickelns detektiert der Sensor 64 die Lage der Papierbahn 12 vor der Wickeltrommel 54. Hierbei wird der Antrieb der Wickeltrommel 54 derart gesteuert, daß die Papierbahn 12 eine konstante Ausbauchung A mit im wesentlichen gleichbleibender Krümmung bildet, wodurch ein absolut gleichmäßiges Aufwickeln sichergestellt ist. Hierbei erfolgt die Regelung des Antriebs der Wickeltrommel 54 durch das Ausgangssignal des Sensors 64, das eine Information über den Abstand des Bauches A von dem Sensor 64 enthält. Hierdurch wird eine sehr feinfühlige und gleichmäßige Regelung erzielt.

Da die Antriebseinrichtung 40 nahe bei der Belichtungswalze 30 angeordnet ist und die Aufwickelvorrichtung 50 nahe bei der Antriebseinrichtung 40 angeordnet ist, sind die bei einem Wechsel der Papierwahl entstehenden Papierverluste außerordentlich gering.

## Patentansprüche

1. Aufwickelvorrichtung für Rollenmaterial, insbesondere für ein Bildbelichtungsgerät, mit
einer angetriebenen Wickeltrommel (54) und
einem Sensor (64) zur Steuerung des Antriebs der Wickeltrommel (54), der ein Ausbauchen des Rollenmaterials (12) vor der Wickeltrommel (54) detektiert,
**dadurch gekennzeichnet, daß**
das Rollenmaterial (12) je nach Durchmesser des Wickels unter einem Winkel von etwa 80° bis etwa 100° zur Horizontalen geführt wird, und daß zumindest ein bewegliches Führungselement (56, 58) vorgesehen ist, das mit zumindest einer Rolle (57, 59, 60) versehen ist, die auf dem sich bildenden Wickel abrollt, so daß der Beginn des Rollenmaterials von selbst auf die Wickeltrommel aufgewickelt wird.

2. Vorrichtung nach Anspruch 1, **dadurch gekennzeichnet, daß** der Sensor (64) einen Kipphebel (68) aufweist, der vorzugsweise mit einer Feder (70) versehen ist.

3. Vorrichtung nach zumindest einem der vorstehenden Ansprüche, **dadurch gekennzeichnet, daß** der Sensor (64) ein analoges oder digitales Ausgangssignal abgibt.

4. Vorrichtung nach zumindest einem der vorstehenden Ansprüche, **dadurch gekennzeichnet, daß** der Sensor (64) eine Gabellichtschranke (66) aufweist.

5. Vorrichtung nach zumindest einem der vorstehenden Ansprüche, **dadurch gekennzeichnet, daß** oberhalb der Wickeltrommel (54) eine Umlenkeinrichtung für das Rollenmaterial (12), vorzugsweise eine Freilaufwalze (62), angeordnet ist.

6. Vorrichtung nach Anspruch 5, **dadurch gekennzeichnet, daß** der Sensor (64) zwischen der Umlenkeinrichtung (62) und der Wickeltrommel (54) angeordnet ist.

7. Vorrichtung nach zumindest einem der vorstehenden Ansprüche, **dadurch gekennzeichnet, daß** der Sensor (64) an dem beweglichen Führungselement (56) für das Rollenmaterial (12) angeordnet ist.

8. Vorrichtung nach zumindest einem der vorstehenden Ansprüche, **dadurch gekennzeichnet, daß** das Rollenmaterial (12) vor dem Aufwickeln durch eine Bremseinrichtung (20) geführt wird.

9. Vorrichtung nach Anspruch 8, **dadurch gekennzeichnet, daß** die Bremseinrichtung (20) eine Wirbelstrombremse aufweist.

10. Vorrichtung nach Anspruch 8 oder 9, **dadurch gekennzeichnet, daß** die Bremseinrichtung zwei Walzen (22, 24) aufweist.

11. Bildbelichtungsgerät für Rollenmaterial mit einer Aufwickelvorrichtung nach einem der vorstehenden Ansprüche.

12. Verfahren zum Steuern einer Vorrichtung nach Anspruch 1, **dadurch gekennzeichnet, daß** der Antrieb der Wickeltrommel beim Aufwickeln derart gesteuert wird, daß das Rollenmaterial vor der Wickeltrommel eine Ausbauchung mit im wesentlichen gleichbleibender Krümmung bildet.

## Claims

1. A take-up unit for rollable material, especially for an image exposure apparatus, having a driven winding drum (54) and a sensor (64) for controlling the drive of the winding drum (54), which sensor detects bellying-out of the rollable material (12) upstream of the winding drum (54), **characterised in that**, depending on the diameter of the wound roll, the rollable material (12) is guided at an angle of approximately 80° to approximately 100° to the horizontal, and there is provided at least one movable guide element (56, 58), which is equipped with at least one roller (57, 59, 60) that rolls on the wound roll that is developing, so that the start of the rollable material is wound automatically onto the winding drum.

2. A unit according to claim 1, **characterised in that** the sensor (64) comprises a rocker arm (68) that is preferably provided with a spring (70).

3. A unit according to at least one of the preceding claims, **characterised in that** the sensor (64) supplies an analogue or digital output signal.

4. A unit according to at least one of the preceding claims, **characterised in that** the sensor (64) comprises a forked light barrier (66).

5. A unit according to at least one of the preceding claims, **characterised in that** a guide means for the rollable material (12), preferably a free-running roller (62), is arranged above the winding drum (54).

6. A unit according to claim 5, **characterised in that** the sensor (64) is arranged between the guide means (62) and the winding drum (54).

7. A unit according to at least one of the preceding claims, **characterised in that** the sensor (64) is arranged on the movable guide element (56) for the rollable material (12).

8. A unit according to at least one of the preceding claims, **characterised in that**, before being wound up, the rollable material (12) is guided through a braking unit (20).

9. A unit according to claim 8, **characterised in that** the braking unit (20) comprises an eddy-current brake.

10. A unit according to claim 8 or 9, **characterised in that** the braking unit comprises two rollers (22, 24).

11. Image exposure apparatus for rollable material having a take-up unit according to one of the preceding claims.

12. A method for controlling a unit according to claim 1, **characterised in that** the drive of the winding drum during take-up is controlled such that the rollable material forms a belly of substantially constant curvature upstream of the winding drum.

## Revendications

1. Dispositif d'enroulement destiné à du matériau à enrouler, notamment à un appareil d'exposition photographique, comportant
un tambour d'enroulement entraîné (54), et
un détecteur (64) destiné à la commande de l'entraînement du tambour d'enroulement (54), qui détecte une convexité du matériau à enrouler (12) en amont du tambour d'enroulement (54),
**caractérisé en ce que**,
en fonction du diamètre du rouleau, le matériau à enrouler (12) est guidé suivant un angle de l'ordre de 80° à environ 100° par rapport à l'horizontale, et **en ce qu'**il est prévu au moins un élément de guidage mobile (56, 58), qui est muni d'au moins un galet (57, 59, 60) qui roule sur la bobine en cours de formation, de manière que le début du matériau à enrouler soit enroulé automatiquement sur le tambour d'enroulement.

2. Dispositif selon la revendication 1, **caractérisé en ce que** le détecteur (64) comporte un levier basculant (68) qui est de préférence muni d'un ressort (70).

3. Dispositif selon l'une au moins des revendications précédentes, **caractérisé en ce que** le détecteur (64) délivre un signal de sortie analogique ou numérique.

4. Dispositif selon l'une au moins des revendications précédentes, **caractérisé en ce que** le détecteur (64) comporte une barrière photoélectrique à fourche (66).

5. Dispositif selon l'une au moins des revendications précédentes, **caractérisé en ce qu'**un dispositif de renvoi pour le matériau à enrouler (12), de préférence un cylindre à roue libre (62), est disposé au-dessus du tambour d'enroulement (54).

6. Dispositif selon la revendication 5, **caractérisé en ce que** le détecteur (64) est disposé entre le dispositif de renvoi (62) et le tambour d'enroulement (54).

7. Dispositif selon l'une au moins des revendications précédentes, **caractérisé en ce que** le détecteur (64) est disposé sur l'élément de guidage mobile (56) pour le matériau à enrouler (12).

8. Dispositif selon l'une au moins des revendications précédentes, **caractérisé en ce que** le matériau à enrouler (12) est guidé à travers un dispositif de freinage (20) avant l'enroulement.

9. Dispositif selon la revendication 8, **caractérisé en ce que** le dispositif de freinage (20) comporte un frein à courant de Foucault.

10. Dispositif selon la revendication 8 ou 9, **caractérisé en ce que** le dispositif de freinage comporte deux cylindres (22, 24).

11. Appareil d'exposition photographique destiné à du matériau à enrouler, comportant un dispositif d'enroulement selon l'une quelconque des revendications précédentes.

12. Procédé destiné à la commande d'un dispositif selon la revendication 1, **caractérisé en ce que**, lors de l'enroulement, l'entraînement du tambour d'enroulement est commandé de telle sorte que le matériau à enrouler forme en amont du tambour d'enroulement une convexité d'une courbure sensiblement constante.
